(19) Europäisches Patentamt
European Patent Office
Office européen des brevets

(11) EP 4 424 776 A1

(12) **EUROPEAN PATENT APPLICATION**
published in accordance with Art. 153(4) EPC

(43) Date of publication:
**04.09.2024 Bulletin 2024/36**

(21) Application number: **22886832.9**

(22) Date of filing: **19.10.2022**

(51) International Patent Classification (IPC):
***C08L 101/02*** *(2006.01)* ***C08K 5/103*** *(2006.01)*
***C08K 5/34*** *(2006.01)* ***G02B 1/04*** *(2006.01)*

(52) Cooperative Patent Classification (CPC):
**C08K 5/103; C08K 5/34; C08L 101/02; G02B 1/04**

(86) International application number:
**PCT/JP2022/038995**

(87) International publication number:
**WO 2023/074504 (04.05.2023 Gazette 2023/18)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **28.10.2021 JP 2021176970**

(71) Applicant: **Zeon Corporation**
**Tokyo 100-8246 (JP)**

(72) Inventor: **SATO, Ayumi**
**Tokyo 100-8246 (JP)**

(74) Representative: **Maiwald GmbH**
**Elisenhof**
**Elisenstraße 3**
**80335 München (DE)**

(54) **RESIN COMPOSITION AND OPTICAL ELEMENT**

(57) It is provided a resin composition containing two or more types of fatty acid ester compounds of a predetermined pentaerythritol at a predetermined ratio and having a percentage of volatilization volume when the volatilization volume is measured under predetermined conditions being 0.10 mass% or less.

EP 4 424 776 A1

## Description

TECHNICAL FIELD

This disclosure relates to a resin composition and an optical element, and, in particular, relates to a resin composition useful for the production of a transmissive optical element, and the transmissive optical element.

BACKGROUND

In recent years, the applications of a transmissive optical element formed using a resin composition have been expanding. Therefore, various examinations have been conventionally performed to provide a transmissive optical element that can exhibit excellent performances using a resin composition. For example, JP2010-184955A (PTL 1) proposes a resin composition that can give a transparent thermoplastic molded article with excellent optical performances and suppressed degradation in the optical performances in a high temperature and high humidity environment. Moreover, for example, JP2009-209166A (PTL 2) proposes an optical resin material with which an optical component can be molded, with a few white turbidity and sufficiently suppressed reduction in light transmittance, even if the optical component is irradiated with high output laser for a long time. Furthermore, for example, WO2005/073321A1 (PTL 3) proposes a resin composition with excellent mold release properties, colorless transparency, and laser resistance.

CITATION LIST

Patent Literature

PTL 1: JP2010-184955A
PTL 2: JP2009-209166A
PTL 3: WO2005/073321A1

SUMMARY

(Technical Problem)

However, the above conventionally proposed resin compositions have room for further improvement in the laser resistance, mold release properties, and heat yellowing resistance of the optical element to be obtained.

Therefore, it could be helpful to provide a resin composition that can achieve a balance of the laser resistance, mold release properties, and heat yellowing resistance of the optical element to be obtained, at a high level.

It could be also helpful to provide an optical element with excellent laser resistance, mold release properties, and heat yellowing resistance.

(Solution to Problem)

The inventor conducted diligent studies with the aim of solving the problems set forth above. Then, the inventor newly discovered that an optical element with excellent laser resistance, mold release properties, and heat yellowing resistance can be formed with a resin composition containing two or more types of predetermined fatty acid ester compounds at a predetermined ratio and having a percentage of volatilization volume when the volatilization volume is measured under predetermined conditions being 0.10 mass% or less. In this manner, the inventor completed the present disclosure.

That is, this disclosure aims to advantageously solve the problems set forth above, and [1] a presently disclosed resin composition contains an alicyclic structure-containing polymer, a hindered amine compound, and a mold release agent, wherein the mold release agent contains two or more types of fatty acid ester compounds selected from the group including fatty acid diester of pentaerythritol, fatty acid triester of pentaerythritol, and fatty acid tetraester of pentaerythritol, one type of compound of the two or more types of fatty acid ester compounds has a content of 50 mass% or more and less than 80 mass% with respect to the whole content of the mold release agent, and the percentage of volatilization volume based on the mass of the resin composition before heating at the time when the resin composition has been heated at 260°C for 1 hour is 0.10 mass% or less. With a resin composition containing two or more types of predetermined fatty acid ester compounds at a predetermined ratio and having a percentage of volatilization volume when the volatilization volume is measured under predetermined conditions being 0.10 mass% or less, an optical element with excellent

laser resistance, mold release properties, and heat yellowing resistance can be formed.

Note that "the content of the mold release agent" means the total amount of the fatty acid ester compound of pentaerythritol (however, including inevitable impurities), and "the content of one type of compound of the two or more types of fatty acid ester compounds" with respect to the whole content of the mold release agent can be measured according to the method described in Examples. "The volatilization volume" of the resin composition can be measured according to the method described in Examples.

[2] In the presently disclosed resin composition according to [1] above, the mold release agent preferably has a content of 0.2 mass% or more and 0.8 mass% or less per 100 parts by mass of the alicyclic structure-containing polymer. With the content of the mold release agent being within the above range, the laser resistance and mold release properties of the optical element to be obtained can be further increased.

[3] Moreover, in the presently disclosed resin composition according to [1] or [2] above, the mold release agent preferably contains fatty acid triester of pentaerythritol and fatty acid tetraester of pentaerythritol. With the mold release agent, a component in the resin composition, containing fatty acid triester of pentaerythritol and fatty acid tetraester of pentaerythritol, the laser resistance and heat yellowing resistance of the optical element to be obtained can be further increased.

[4] Furthermore, in the presently disclosed resin composition according to any one of [1] to [3] above, one type of fatty acid ester compound having a higher degree of esterification of the two or more types of fatty acid ester compounds preferably has a content of 50 mass% or more and less than 80 mass% with respect to the whole content of the mold release agent. With the content of one type of fatty acid ester compound having a higher degree of esterification with respect to the whole content of the mold release agent being 50 mass% or more and less than 80 mass%, the laser resistance and mold release properties of the optical element to be obtained can be further increased.

[5] This disclosure aims to advantageously solve the problems set forth above, and a presently disclosed optical element contains an alicyclic structure-containing polymer, a hindered amine compound, and a mold release agent, wherein the mold release agent contains two or more types of fatty acid ester compounds selected from the group including fatty acid diester of pentaerythritol, fatty acid triester of pentaerythritol, and fatty acid tetraester of pentaerythritol, one type of compound of the two or more types of fatty acid ester compounds has a content of 50 mass% or more and less than 80 mass% with respect to the whole content of the mold release agent, and the percentage of volatilization volume based on the mass of the optical element before heating at the time when the optical element has been heated at 260°C for 1 hour is 0.10 mass% or less. An optical element containing two or more types of predetermined fatty acid ester compounds at a predetermined ratio and having a percentage of volatilization volume when the volatilization volume is measured under predetermined conditions being 0.10 mass% or less has excellent laser resistance, mold release properties, and heat yellowing resistance.

(Advantageous Effect)

This disclosure can provide a resin composition that can achieve a balance of the laser resistance, mold release properties, and heat yellowing resistance of the optical element to be obtained, at a high level.

This disclosure can also provide an optical element with excellent laser resistance, mold release properties, and heat yellowing resistance.

## BRIEF DESCRIPTION OF THE DRAWINGS

In the accompanying drawings:
FIG. 1 is an example graph of a heating loss curve of pentaerythritol fatty acid ester.

## DETAILED DESCRIPTION

The following provides a detailed description of embodiments of the present disclosure. A presently disclosed resin composition can be preferably used, for example, for the production of a presently disclosed optical element. The optical element can include, but is not particularly limited to, transmissive optical elements used for various applications. Of these optical elements, the optical element formed using the presently disclosed resin composition can be preferably used for an application in which a semiconductor laser having a short oscillation wavelength (for example, blue laser having a wavelength of 350 nm or more and 530 nm or less) and a light-emitting diode (LED) are irradiated.

(Resin composition)

The presently disclosed resin composition is a resin composition that contains an alicyclic structure-containing polymer, a hindered amine compound, and a mold release agent. More specifically, the mold release agent contained

in the presently disclosed resin composition contains two or more types of fatty acid ester compounds selected from the group including fatty acid diester of pentaerythritol, fatty acid triester of pentaerythritol, and fatty acid tetraester of pentaerythritol, and one type of compound of the two or more types of fatty acid ester compounds has a content of 50 mass% or more and less than 80 mass% with respect to the whole content of the mold release agent. Moreover, in the presently disclosed resin composition, the percentage of volatilization volume based on the mass of the resin composition before heating at the time when the resin composition has been heated at 260°C for 1 hour is 0.10 mass% or less. With a resin composition containing two or more types of predetermined fatty acid ester compounds at a predetermined ratio and having a percentage of volatilization volume when the volatilization volume is measured under predetermined conditions being 0.10 mass% or less, an optical element with excellent laser resistance, mold release properties, and heat yellowing resistance can be formed.

<Volatilization volume of resin composition>

The presently disclosed resin composition requires that the percentage of volatilization volume based on the mass of the resin composition before heating at the time when the resin composition has been heated at 260°C for 1 hour is 0.10 mass% or less. Furthermore, the percentage of volatilization volume is preferably 0.09 mass% or less, more preferably 0.08 mass% or less, and further preferably 0.06 mass% or less. No particular lower limit is placed on the volatilization volume. However, for example, the lower limit can be 0.005 mass% or more. When the percentage of volatilization volume is not more than any of the upper limits set forth above, the laser resistance of the optical element to be obtained can be increased. It is thought that the volatilization volume of the resin composition varies according to the amount of low molecular weight components that may blended or inevitably mixed into the resin composition. The specification of the low molecular weight components is not clear. However, examples of the candidate thereof include free fatty acid that may inevitably accompany a fatty acid ester compound that may be blended as a mold release agent.

<Alicyclic structure-containing polymer>

The alicyclic structure-containing polymer used in this disclosure is a polymer having an alicyclic structure at the main chain and/or side chain. A polymer containing an alicyclic structure at the main chain is preferable, from a viewpoint of the transparency (light transmittance), mechanical strength, heat resistance, etc.

The alicyclic structure includes a saturated cyclic hydrocarbon (cycloalkane) structure and an unsaturated cyclic hydrocarbon (cycloalkene) structure. However, a cycloalkane structure is preferable, from a viewpoint of the transparency, mechanical strength, heat resistance, light resistance, weather resistance, etc. The number of carbon that constitutes the alicyclic structure is in a range of normally 4 to 30, preferably 5 to 20, and more preferably 5 to 15, from a viewpoint of the transparency, mechanical strength, heat resistance, shaping processability, etc. The percentage of a repeating unit having an alicyclic structure is normally 50 mass% or more, preferably 70 mass% or more, and more preferably 90 mass% or more, and the upper limit thereof is 100 mass%. The percentage of a repeating unit having an alicyclic structure being withing any of the ranges set forth above is preferable, from a viewpoint of the transparency, heat resistance, light resistance, etc.

Examples of the alicyclic structure-containing polymer include a norbornene-based polymer, a monocyclic cycloalkene addition polymer, a vinylcycloalkane polymer, a cyclic conjugated diene-based polymer, and hydrogenated products thereof. Of these alicyclic structure-containing polymers, a norbornene-based polymer, a monocyclic cycloalkene addition polymer, a vinylcycloalkane polymer, and hydrogenated products thereof are preferable.

(1) Norbornene-based polymer:

Examples of the norbornene-based polymer include a ring-opened polymer or ring-opened copolymer of a norbornene-based monomer, an addition polymer or addition copolymer of a norbornene-based monomer, an addition copolymer of a norbornene-based monomer and a vinyl compound, and hydrogenated products thereof.

Specific examples of the norbornene-based monomer include norbornene-based monomers having no norbornane ring, such as norbornene such as bicyclo[2.2.1]hept-2-ene (trivial name: "norbornene"), 5-methyl-bicyclo[2.2.1]hept-2-ene, 5,5-dimethyl-bicyclo[2.2.1]hept-2-ene, 5-ethyl-bicyclo[2.2.1]hept-2-ene, 5-butyl-bicyclo[2.2.1]hept-2-ene, 5-hexyl-bicyclo[2.2.1]hept-2-ene, 5-octyl-bicyclo[2.2.1]hept-2-ene, 5-octadecyl-bicyclo[2.2.1]hept-2-ene, 5-ethylidene-bicyclo[2.2.1]hept-2-ene, 5-methylidene-bicyclo[2.2.1]hept-2-ene, 5-vinyl-bicyclo[2.2.1]hept-2-ene, 5-propenyl-bicyclo[2.2.1]hept-2-ene, 5-methoxy-carbonyl-bicyclo[2.2.1]hept-2-ene, 5-cyano-bicyclo[2.2.1]hept-2-ene, 5-methyl-5-methoxycarbonyl-bicyclo[2.2.1]hept-2-ene, 5-methoxycarbonyl-bicyclo[2.2.1]hept-2-ene, 5-ethoxycarbonyl-bicyclo[2.2.1]hept-2-ene, 5-methyl-5-ethoxycarbonyl-bicyclo[2.2.1]hept-2-ene, bicyclo[2.2.1]hept-5-enyl-2-methylpropionate, bicyclo[2.2.1]hept-5-enyl-2-methyloctanate, bicyclo[2.2.1]hept-2-ene-5,6-dicarboxylic anhydride, 5-hydroxymethyl-bicyclo[2.2.1]hept-2-ene, 5,6-di(hydroxymethyl)-bicyclo[2.2.1]hept-2-ene, 5-hydroxy-i-propyl-bicyclo[2.2.1]hept-2-ene, 5,6-dicarboxy-bicyclo[2.2.1]hept-2-ene, bicyclo[2.2.1]hept-2-ene-5,6-dicarboxylic acid imide, 5-cyclopentyl-bicyclo[2.2.1]hept-2-ene, 5-cyclohexyl-bicyclo[2.2.1]hept-2-ene, 5-cyclohexenyl-bicyclo[2.2.1]hept-2-ene, 5-phenyl-bicyclo[2.2.1]hept-2-ene and derivatives thereof; dicyclopentadiene such as tricyclo[4.3.$1^{2,5}$.$0^{1,6}$]deca-3,7-diene (trivial name: "dicyclopentadiene"), tricyclo[4.3.$1^{2,5}$.$0^{1,6}$]deca-3-ene, tricyclo[4.4.$1^{2,5}$.$0^{1,6}$]undeca-3,7-diene, tricyclo[4.4.$1^{2,5}$.$0^{1,6}$]undeca-3,8-diene, tricyclo[4.4.$1^{2,5}$.$0^{1,6}$]undeca-3-ene, and derivatives thereof; tetracyclo[7.4.$1^{10,13}$.$0^{1,9}$.$0^{2,7}$]trideca-2,4,6-11-tetraene (also referred to as "1,4-methano-1,4,4a,9a-tetrahydrofluorene") and derivatives thereof; and tetracyclo[8.4.$1^{11,14}$.$0^{1,10}$.$0^{3,8}$]tetradeca-3,5,7,12-11-tetraene (also referred to as "1,4-methano-1,4,4a,5,10,10a-hexahydroanthracene") and derivatives thereof.

The norbornene-based monomer also include norbornene-based monomers having a norbornane ring, such as tetracyclododecene such as tetracyclo[4.4.$1^{2,5}$.$1^{7,10}$.0]dodeca-3-ene (trivial name: "tetracyclododecene"), 8-methyl-tetracyclo[4.4.$1^{2,5}$.$1^{7,10}$.0]dodeca-3-ene, 8-ethyl-tetracyclo[4.4.$1^{2,5}$.$1^{7,10}$.0]dodeca-3-ene, 8-methylidene-tetracyclo[4.4.$1^{2,5}$.$1^{7,10}$.0]dodeca-3-ene, 8-ethylidene-tetracyclo[4.4.$1^{2,5}$.$1^{7,10}$.0]dodeca-3-ene, 8-vinyl-tetracyclo[4.4.$1^{2,5}$.$1^{7,10}$.0]dodeca-3-ene, 8-propenyl-tetracyclo[4.4.$1^{2,5}$.$1^{7,10}$.0]dodeca-3-ene, 8-methoxycarbonyl-tetracyclo[4.4.$1^{2,5}$.$1^{7,10}$.0]dodeca-3-ene, 8-methyl-8-methoxycarbonyl-tetracyclo[4.4.$1^{2,5}$.$1^{7,10}$.0]dodeca-3-ene, 8-hydroxymethyl-tetracyclo[4.4.$1^{2,5}$.$1^{7,10}$.0]dodeca-3-ene, 8-carboxy-tetracyclo[4.4.$1^{2,5}$.$1^{7,10}$.0]dodeca-3-ene, 8-cyclopentyl-tetracyclo[4.4.$1^{2,5}$.$1^{7,10}$.0]dodeca-3-ene, 8-cyclohexyl-tetracyclo[4.4.$1^{2,5}$.$1^{7,10}$.0]dodeca-3-ene, 8-cyclohexenyl-tetracyclo[4.4.$1^{2,5}$.$1^{7,10}$.0]dodeca-3-ene, 8-phenyl-tetracyclo[4.4.$1^{2,5}$.$1^{7,10}$.0]dodeca-3-ene, and derivatives thereof; pentacyclo[6.5.$1^{1,8}$.$1^{3,6}$.$0^{2,7}$.$0^{9,13}$]pentadeca-3,10-diene and derivatives thereof; and pentacyclo[7.4.$1^{3,6}$.$1^{10,13}$.$0^{1,9}$.$0^{2,7}$]pentadeca-4,11-diene and derivatives thereof.

One of such norbornene-based monomers may be used individually, or two or more of such norbornene-based monomers may be used in combination. The norbornene-based monomer and the other copolymerizable monomer can be used to be a copolymer.

Examples of the other monomer copolymerizable with the norbornene-based monomer include $\alpha$-olefin having a carbon number of 2 to 20 such as ethylene, propylene, 1-butene, 1-pentene, 1-hexene, 3-methyl-1-butene, 3-methyl-1-pentene, 3-ethyl-1-pentene, 4-methyl-1-pentene, 4-methyl-1-hexene, 4,4-dimethyl-1-hexene, 4,4-dimethyl-1-pentene, 4-ethyl-1-hexene, 3-ethyl-1-hexene, 1-octene, 1-decene, 1-dodecene, 1-tetradecene, 1-hexadecene, 1-octadecene, and 1-eicosen; cycloolefin such as cyclobutene, cyclopentene, cyclohexene, 3,4-dimethylcyclopentene, 3-methylcyclohexene, 2-(2-methylbutyl)-1-cyclohexene, cyclooctene, and 3a,5,6,7a-tetrahydro-4,7-methano-1H-indene; and non-conjugated diene such as 1,4-hexadiene, 4-methyl-1,4-hexadiene, 5-methyl-1,4-hexadiene, and 1,7-octadiene. One of such copolymerizable monomers may be used individually, or two or more of such copolymerizable monomers may be used in combination.

The ring-opened polymer of the norbornene-based monomer can be synthesized according to a known method (see, for example, JP2009-209166A). The hydrogenated norbornene-based polymer can be obtained by a method of hydrogenating a ring-opened polymer (including a ring-opened copolymer) with hydrogen in the presence of a hydrogenation catalyst, according to a conventional method.

The addition copolymer of the norbornene-based monomer and the copolymerizable monomer can be synthesized according to a known method (see, for example, JP2009-209166A). A representative addition copolymer is an addition copolymer of the norbornene-based monomer and ethylene.

As such norbornene-based polymer, a hydride of the ring-opened (co)polymer of the norbornene-based monomer, the addition copolymer of the norbornene-based monomer and ethylene, etc. are preferable.

(2) Monocyclic cycloalkene addition polymer:

The monocyclic cycloalkene addition polymer can be synthesized by performing addition polymerization of a monocyclic cycloalkene monomer of cyclobutene, cyclopentene, cyclohexene, 3,4-dimethylcyclopentene, cycloheptene, cyclooctene, etc., or performing addition copolymerization of the monocyclic cycloalkene monomer with the other copolymerizable monomer. The monocyclic cycloalkene addition polymer can include an addition (co)polymer of an alicyclic conjugated diene monomer and as necessary the other monomer copolymerizable with it, having a hydrogenated unsaturated bond as necessary.

(3) Vinylcycloalkane polymer:

Examples of the vinylcycloalkane polymer include a (co)polymer of vinylcycloalkane and as necessary the other monomer copolymerizable with it; a hydride of an unsaturated bond of a (co)polymer of vinylcycloalkene and as necessary the other monomer copolymerizable with it; and a hydride of an aromatic ring and olefinic unsaturated bond of a (co)polymer of an aromatic vinyl monomer and as necessary the other monomer copolymerizable with it.

Examples of the vinylcycloalkane include vinylcyclopentane, 2-methyl-4-vinylcyclopentane, vinylcyclohexane, and vinylcyclooctane. Examples of the vinylcycloalkene include vinylcyclopentene, 2-methyl-4-vinylcyclopentene, and

vinylcyclohexene. Examples of the aromatic vinyl monomer include styrene, α-methylstyrene, divinyl benzene, vinylnaphthalene, and vinyltoluene.

Examples of the other monomer copolymerizable with vinylcycloalkane, vinylcycloalkene, and an aromatic vinyl monomer include chain olefin such as ethylene, propylene, 1-butene, 1-pentene, 1-hexene, 3-methyl-1-butene, and 3-methyl-pentene; non-conjugated diene such as 1,4-hexadiene, 4-methyl-1,4-hexadiene, 5-methyl-1,4-hexadiene, and 1,7-octadiene; and conjugated diene such as 1,3-butadiene, isoprene, and 1,3-hexadiene.

The polymerization reaction of the aromatic vinyl monomer, vinylcycloalkene, or vinylcycloalkane may be performed by a commonly known method such as radical polymerization, anionic polymerization, or cationic polymerization. However, the molecular weight of the polymer is reduced in the cationic polymerization, the molecular weight distribution is broad to have a tendency to reduce the mechanical strength of the compact in the radical polymerization, and the anionic polymerization is thus preferable. Any of suspension polymerization, solution polymerization, and bulk polymerization may be used as a polymerization method.

The anionic polymerization reaction can be performed according to a known method (see, for example, JP2009-209166A).

Of the vinylcycloalkane polymers, a hydride of a homopolymer of the aromatic vinyl monomer, a hydride of a copolymer of the aromatic vinyl monomer and the chain olefin, a hydride of a copolymer of the aromatic vinyl monomer and the conjugated diene, a hydride of a ternary copolymer of the aromatic vinyl monomer, the chain olefin, and the conjugated diene, etc. are preferable.

(4) Cyclic conjugated diene-based polymer:

As the cyclic conjugated diene-based polymer, a polymer obtained by performing 1,2- or 1,4-addition polymerization on a cyclic conjugated diene-based monomer such as cyclopentadiene and cyclohexadiene, and hydrogenated products thereof can be used.

The alicyclic structure-containing polymer may have a polar group such as a hydroxyl group, a carboxyl group, an alkoxy group, an epoxy group, a glycidyl group, an oxycarbonyl group, a carbonyl group, an amino group, an ester group, and an acid anhydride group.

When the alicyclic structure-containing polymer has an unsaturated bond, using the alicyclic structure-containing polymer by being hydrogenated is preferable, from a viewpoint of the laser resistance, transparency, heat resistance, etc. The hydrogenation rate of a non-conjugated carbon-carbon double bond in the alicyclic structure-containing polymer is normally 80% or more, preferably 90% or more, and more preferably 99% or more.

Hydrogenation (hydrogenation reaction) can be performed according to a conventional method. However, depending on the type of the polymer to be hydrogenated, the amount of a hydrogenation catalyst, reaction temperature, hydrogen partial pressure, reaction time, and reaction solution concentration can be set into optimal ranges as appropriate. No particular limitation is placed on the hydrogenation catalyst. However, a homogeneous catalyst obtained in combination of a metal compound such as nickel and cobalt, and organoaluminum or organolithium is preferable. For the hydrogenation catalyst, a carrier such as activated carbon, diatomite, and magnesia can be used as necessary. The amount of the hydrogenation catalyst is normally 0.01 to 50 parts by mass per 100 parts by mass of the polymer. The reaction temperature is normally 25 to 300°C. The hydrogen partial pressure is normally 0.5 to 10 MPa. The reaction time is normally 0.5 to 20 hours.

The hydrogenated alicyclic structure-containing polymer can be obtained by removing a solvent and the like from a solution obtained by filtering a hydrogenation reaction solution to separate the hydrogenation catalyst. The method of removing the solvent and the like includes coagulation and direct drying methods. The coagulation method is a method of mixing a polymer solution with a poor solvent of the polymer to deposit the polymer. The deposited nubbly polymer (crumb) is solid-liquid separated, and the polymer is heated and dried to remove the solvent. Examples of the poor solvent include polar solvents, such as alcohols such as ethanol, n-propanol, and isopropanol; ketones such as acetone and methyl ethyl ketone; and esters such as ethyl acetate and butyl acetate.

The direct drying method is a method of heating a polymer solution under reduced pressure to remove the solvent and can be performed using a commonly known device such as a centrifugal film continuous evaporation dryer, a scraped surface heat exchanger type continuous reactor type dryer, and a high-viscosity reactor device. The degree of vacuum and temperature can be selected as appropriate depending on the device.

The molecular weight of the alicyclic structure-containing polymer is a weight-average molecular weight (Mw) in terms of polystyrene, which is measured by gel permeation chromatograph (GPC) of a cyclohexane solution (toluene solution when the polymer is not dissolved) and is normally 5,000 to 500,000, preferably 10,000 to 200,000, and more preferably 20,000 to 150,000. The weight-average molecular weight of the alicyclic structure-containing polymer being within any of the ranges set forth above is preferable for achieving a balance of the mechanical strength and shaping processability at a high level. The molecular weight distribution (Mw/Mn) of the alicyclic structure-containing polymer, which is measured by GPC, is normally 5.0 or less, and preferably 2.5 or less.

The glass-transition temperature (Tg) of the alicyclic structure-containing polymer is normally 50 to 300°C, preferably 100 to 200°C, and more preferably 120 to 180°C. The glass-transition temperature is a value measured using a differential scanning calorimeter (DSC).

<Hindered amine compound>

The hindered amine compound is a component that may function as a light stabilizer in the resin composition. As the hindered amine compound, a compound that contains a piperidine ring in which a substituted group is bonded to a carbon atom adjacent to a nitrogen atom can be used. Such hindered amine compound is preferably a compound that contains a plurality of piperidine rings, in each piperidine ring, a substituted group is bonded to each of two carbon atoms adjacent to a nitrogen atom. As the substituted group bonded to a carbon atom adjacent to a nitrogen atom, an alkyl group such as a methyl group and an ethyl group is preferable. A compound in which a methyl group is bonded to each of two carbon atoms adjacent to a nitrogen atom is more preferable.

The hindered amine compound is one of additives that prevent the photooxidation deterioration of plastic and known to have functions such as radical capturing ability, hydroperoxide resolution, and metal ion capturing ability. The hindered amine compound has, for example, a function to capture radical generated by photoirradiation to deactivate it.

Examples of the hindered amine compound include high-molecular-weight hindered amine compounds in which a plurality of piperidine rings are bonded via triazine skeletons, such as N,N',N",N'''-tetrakis-[4,6-bis[butyl-(N-methyl-2,2,6,6-tetramethylpiperidine-4-yl)amino]-triazine-2-yl]-4,7-diazadecane-1,10-amine, a polycondensate of dibutylamine and 1,3,5-triazine and N,N-bis(2,2,6,6-tetramethyl-4-piperidyl)butylamine, poly[{6-(1,1,3,3-tetramethylbutyl)amino-1,3,5-triazine-2,4-diyl} {(2,2,6,6-tetramethyl-4-piperidyl)imino}hexamethylene{(2,2,6,6-tetramethyl-4-piperidyl)imino}], a polycondensate of 1,6-hexanediamine-N,N'-bis(2,2,6,6-tetramethyl-4-piperidyl) and morpholine-2,4,6-trichloro-1,3,5-triazin, poly[(6-morpholino-s-triazine-2,4-diyl)][(2,2,6,6-tetramethyl-4-piperidyl)imino]-hexamethylene[(2,2,6,6-tetramethyl-4-piperidyl)imino], a polycondensate of dibutylamine, 2,4,6-trichloro-1,3,5-triazine, N,N'-bis(2,2,6,6-tetramethyl-4-piperidyl-1,6-hexamethylendiamine, and N-(2,2,6,6-tetramethyl-4-piperidyl)butylamine; high-molecular-weight hindered amine compounds in which piperidine rings are bonded via an ester bond, such as a polymerized product of dimethyl succinate and 4-hydroxy-2,2,6,6-tetramethyl-1-piperidineethanol, and a mixed esterified product of 1,2,3,4-butanetetracarboxylic acid and 1,2,2,6,6-pentamethyl-4-piperidinol and 3,9-bis(2-hydroxy-1,1-dimethylethyl)-2,4,8,10-tetraoxaspiro[5,5]undecane; and low-molecular-weight hindered amine compounds such as N,N'-bis(2,2,6,6-tetramethyl-4-piperidyl)-N,N'-diformylhexamethylenediamine, bis(1,2,6,6-)pentamethyl-4-piperidyl)-2-(3,5-ditertiarybutyl-4-hydroxybenzyl)-2-n-butylmalonate, bis(1,2,2,6,6-pentamethyl-4-piperidinyl)sebacate, bis(2,2,6,6-tetramethyl-4-piperidinyl)sebacate, and bis(N-methyl-2,2,6,6-tetramethyl-4-piperidinyl(sebacate).

Of these hindered amine compounds, particularly preferred hindered amine compounds are poly[{6-(1,1,3,3-tetramethylbutyl)amino-1,3,5-triazine-2,4-diyl} {(2,2,6,6-tetramethyl-4-piperidyl)imino}hexamethylene{(2,2,6,6-tetramethyl-4-piperidyl)imino}], N,N'-bis(2,2,6,6-tetramethyl-4-piperidyl)-N,N'-diformylhexamethylenediamine, bis(1,2,2,6,6-pentamethyl-4-piperidinyl)sebacate, and a polycondensate of dibutylamine, 2,4,6-trichloro-1,3,5-triazine, N,N'-bis(2,2,6,6-tetramethyl-4-piperidyl-1,6-hexamethylendiamine, and N-(2,2,6,6-tetramethyl-4-piperidyl)butylamine.

The molecular weight of the hindered amine compound is preferably 2,000 or more and 5,000 or less. The presently disclosed resin composition contains a specific mold release agent, thus having excellent dispersibility of the hindered amine compound. The molecular weight of the hindered amine compound is a number-average molecular weight measured by gel permeation chromatograph (GPC) using tetrahydrofuran as a solvent.

[Content of hindered amine compound]

The content of the hindered amine compound is preferably 0.01 parts by mass or more, and more preferably 0.05 parts by mass or more, and is preferably 0.2 parts by mass or less, and more preferably 0.15 parts by mass or less, per 100 parts by mass of the alicyclic structure-containing polymer. When the content of the hindered amine compound is not less than any of the lower limits set forth above, the effect of improvement in light resistance can be sufficiently provided, and the occurrence of coloring, for example, when the optical element is used outdoors for a long time, can be effectively suppressed. When the content of the hindered amine compound is not more than any of the upper limits set forth above, the coloring of the optical element to be obtained, due to the coloring of the hindered amine compound itself, can be suppressed. Moreover, when the content of the hindered amine compound is not more than any of the upper limits set forth above, the reduction in transparency of the optical element, due to volatilization of a part of the hindered amine compound as a gas or reduction in dispersibility into the alicyclic structure-containing, polymer can be effectively suppressed.

<Mold release agent>

The mold release agent contains two or more types of fatty acid ester compounds selected from the group including fatty acid diester of pentaerythritol, fatty acid triester of pentaerythritol, and fatty acid tetraester of pentaerythritol. The fatty acid diester of pentaerythritol, fatty acid triester of pentaerythritol, and fatty acid tetraester of pentaerythritol are fatty acid ester compounds expressed by Formula (1) below:

$$(RCOOCH_2)_mC(CH_2OH)_n \ldots \qquad (1)$$

(wherein, R is a hydrocarbon group having a carbon number of 8 to 26, m is an integer of 2 to 4, and the sum of m and n is 4).

Examples of fatty acid used for synthesis of the fatty acid ester of pentaerythritol include lauric acid [$CH_3(CH_2)_{10}COOH$], myristic acid [$CH_3(CH_2)_{12}COOH$], palmitic acid [$CH_3(CH_2)_{14}COOH$], stearic acid [$CH_3(CH_2)_{16}COOH$], oleic acid ($C_{18}H_{34}O_2$), and behenic acid [$CH_3(CH_2)_{20}COOH$]. Of these fatty acids, stearic acid [$CH_3(CH_2)_{16}COOH$] is preferable, from a viewpoint of the volatility and versatility.

[Compound ratio of compound in mold release agent]

In the mold release agent, the content of one type of compound (hereinafter, also referred to as "fatty acid ester compound A") of the two or more types of fatty acid ester compounds is required to be 50 mass% or more and less than 80 mass%, is preferably 60 mass% or more, and is preferably 72 mass% or less, with respect to the whole content of the mold release agent. When the fatty acid ester compound A is within the ranges set forth above with respect to the whole content of the mold release agent, the laser resistance and mold release properties can be more increased with being well-balanced.

The content of one type of fatty acid ester compound having a higher degree of esterification of the two or more types of fatty acid ester compounds is preferably 50 mass% or more, and more preferably 60 mass% or more, and is preferably less than 80 mass%, and more preferably 72 mass% or less, with respect to the whole content of the mold release agent. In other words, the fatty acid ester compound A is a fatty acid ester compound having a higher degree of esterification, and the content thereof preferably satisfies the ranges set forth above. When the content of one type of fatty acid ester compound having a higher degree of esterification with respect to the whole content of the mold release agent satisfies the content ranges set forth above, the laser resistance and mold release properties of the optical element to be obtained can be further increased.

Of the fatty acid ester compounds other than the fatty acid ester compound A, the fatty acid ester compound having the most content is referred to as a "fatty acid ester compound B". The contain percentage of the fatty acid ester compound B is preferably 20 mass% or more, and more preferably 25 mass% or more, and is preferably less than 50 mass%, and more preferably 32 mass% or less.

Furthermore, the mold release agent preferably contains fatty acid triester of pentaerythritol and fatty acid tetraester of pentaerythritol. When the mold release agent, a component in the resin composition, contains fatty acid triester of pentaerythritol and fatty acid tetraester of pentaerythritol, the light transmittance, laser resistance, and heat yellowing resistance of the optical element to be obtained can be further increased. In this case, it is preferable that the fatty acid tetraester of pentaerythritol corresponds to the "fatty acid ester compound A" as described above, and the fatty acid triester of pentaerythritol corresponds to the "fatty acid ester compound B".

[Content of mold release agent]

The content of the mold release agent is preferably 0.2 mass% or more, and more preferably 0.3 mass% or more, and is preferably 0.8 mass% or less, and further preferably 0.6 mass% or less, per 100 parts by mass of the alicyclic structure-containing polymer. When the content of the mold release agent is not less than any of the lower limits set forth above, the mold release properties of the optical element to be obtained can be increased to facilitate continuous molding of the optical element. When the content of the mold release agent is not more than any of the upper limits set forth above, the light transmittance and laser resistance of the optical element to be obtained can be increased.

<Other components>

Furthermore, the presently disclosed resin composition may optionally contain other components other than the above-described components. Examples of the other components can include, but are not particularly limited to, an antioxidant and a moisture resistance agent.

[Antioxidant]

Examples of the antioxidant include a phenol antioxidant and a phosphorus antioxidant (however, except for an antioxidant corresponding to a phenol antioxidant). Of these antioxidants, a hindered phenol-based antioxidant is preferable.

Blending the antioxidant into the presently disclosed resin composition can prevent coloring and reduction in strength of the shaped product due to oxidation deterioration at the time of shaping. Examples of the phenol antioxidant include hindered phenol-based antioxidants having a phosphorus atom intramolecularly, such as acrylate compounds such as 2-t-butyl-6-(3-t-butyl-2-hydroxy-5-methylbenzyl)-4-methylphenylacrylate and 2,4-di-t-amyl-6-[1-(3,5-di-t-amyl-2-hydroxyphenyl)ethyl]phenylacrylate; alkyl substituted phenol compounds such as octadecyl-3-(3,5-di-t-butyl-4-hydroxyphenyl)propionate, 2,2'-methylene-bis(4-methyl-6-t-butylphenol), 1,1,3-tris(2-methyl-4-hydroxy-5-t-butylphenyl)butane, 1,3,5-trimethyl-2,4,6-tris(3,5-di-t-butyl-4-hydroxybenzyl)benzene, tetrakis(methylene-3-(3',5'-di-t-butyl-4'-hydroxyphenylpropionate)methane [i.e., pentaerythritol-tetrakis[3-(3,5-di-t-butyl-4-hydroxyphenyl)propionate]], and triethylene glycol-bis[3-(3-t-butyl-4-hydroxy-5-methylphenyl)propionate]; triazine group-containing phenol compounds such as 6-(4-hydroxy-3,5-di-t-butylanilino)-2,4-bisoctylthio-1,3,5-triazine, 4-bisoctylthio-1,3,5-triazine, and 2-octylthio-4,6-bis-(3,5-di-t-butyl-4-oxyanilino)-1,3,5-triazine; and 6-t-butyl-4-[3-(2,4,8,10-tetra-t-butyldibenzo[d,f][1,3,2]dioxaphosphepin-6-yloxy)propyl]-o-cresol.

Examples of the phosphorus antioxidant include monophosphite compounds such as triphenyl phosphite, diphenyl isodecyl phosphite, phenyl diisodecyl phosphite, tris(nonylphenyl)phosphite, tris(dinonylphenyl)phosphite, tris(2,4-di-t-butylphenyl)phosphite, and 10-(3,5-di-t-butyl-4-hydroxybenzyl)-9,10-dihydro-9-oxa-10-phosphaphenanthrene-10-oxide; and diphosphite compounds such as 4,4'-butylidene-bis(3-methyl-6-t-butylphenyl-di-tridecylphosphite) and 4,4'isopropylidene-bis(phenyl-di-alkyl (C12 to C15) phosphite). Of these phosphorus antioxidants, the monophosphite compound is preferable, and tris(nonylphenyl)phosphite, tris(dinonylphenyl)phosphite, tris(2,4-di-t-butylphenyl)phosphite, etc. are particularly preferable. The phenol structure is obtained such that at least one hydroxy group is bonded to a benzene ring.

The hindered phenol-based antioxidant is a compound having a group expressed by Formula (1) below and can capture peroxy radical.

[Chem. 1]

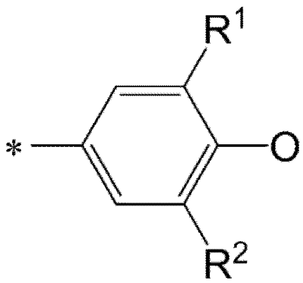

(1)

In Formula (1), $R^1$ and $R^2$ each independently represent a group having a carbon number of 1 or more, and the sum of the carbon numbers that constitute $R^1$ and $R^2$ is 2 to 20, preferably 3 to 15, and more preferably 5 to 10. The asterisk (*) represents an atomic bond. $R^1$ and $R^2$ each include an alkyl group such as a methyl group, an ethyl group, an n-propyl group, an isopropyl group, an n-butyl group, an isobutyl group, a s-butyl group, and a t-butyl group. $R^1$ and $R^2$ may be each obtained such that a sulfur atom is inserted into a carbon-carbon bond of such alkyl group. The number of groups expressed by Formula (1) above contained in the hindered phenol-based antioxidant is not particularly limited, but is normally 1 to 10, and preferably 1 to 5.

No particular limitation is placed on the content of the antioxidant. The content of the antioxidant is, for example, preferably 0.01 parts by mass or more, and more preferably 0.03 parts by mass or more, and is preferably 1.0 parts by mass or less, and more preferably 0.5 parts by mass or less, per 100 parts by mass of the alicyclic structure-containing polymer.

[Moisture resistance agent]

As the moisture resistance agent, for example, an elastomer such as a main chain hydride of a styrene-butadiene-styrene block copolymer [styrene-ethylene-butylene-styrene block copolymer (SEBS)] and a main chain hydride of a styrene-isoprene-styrene block copolymer [= styrene-ethylene-propylene-styrene block copolymer (SEPS)] can be added. Adding such moisture resistance agent prevents the optical component from becoming clouded under

high temperature and high humidity. The additive amount of the moisture resistance agent is in a range of preferably 0.05 parts by mass or more, more preferably 0.1 parts by mass or more, and further preferably 0.15 parts by mass or more, and preferably 10 parts by mass or less, more preferably 1 part by mass or less, and further preferably 0.3 parts by mass or less, per 100 parts by mass of the alicyclic structure-containing polymer.

[Other additives]

The presently disclosed resin composition can also contain other additives such as commonly known other mold release agent, flame retardant, antibacterial agent, wood flour, coupling agent, plasticizer, colorant, lubricant, silicon oil, foaming agent, surfactant, and filler, within a range not to impair the original purpose.

<Method of producing resin composition>

The method of producing the presently disclosed resin composition is not particularly limited, and the presently disclosed resin composition can be produced by, for example, a method that allows well mixing of the above-described required components: the alicyclic structure-containing polymer, the hindered amine compound, and the mold release agent, as well as various additives that may be optionally added. Examples of such method include a method of kneading the alicyclic structure-containing polymer in a molten state using a twin screw kneader or the like, and a method of dissolving the materials in an appropriate solvent to disperse and mix them, and then removing the solvent using a coagulation method, a casting method, or a direct drying method. The obtained resin composition may be shaped into pellets by any method.

For kneading, for example, a melt kneader such as a single-screw extruder, a twin-screw extruder, a Banbury mixer, a kneader, a roll, and a feeder ruder can be used. The kneading temperature is preferably 200°C or more, and more preferably 240°C or more, and is preferably 400°C or less, and more preferably 300°C or less. During kneading, the respective components may be collectively kneaded or may be kneaded while being added in installments.

(Optical element)

The presently disclosed optical element is an optical element that contains an alicyclic structure-containing polymer, a hindered amine compound, and a mold release agent. The mold release agent contains two or more types of fatty acid ester compounds selected from the group including fatty acid diester of pentaerythritol, fatty acid triester of pentaerythritol, and fatty acid tetraester of pentaerythritol, and one type of compound of the two or more types of fatty acid ester compounds has a content of 50 mass% or more and less than 80 mass% with respect to the whole content of the mold release agent. Furthermore, the percentage of volatilization volume based on the mass of the optical element before heating at the time when the optical element has been heated at 260°C for 1 hour is 0.10 mass% or less. The presently disclosed optical element contains two or more types of predetermined fatty acid ester compounds at a predetermined ratio and having a percentage of volatilization volume when the volatilization volume is measured under predetermined conditions is 0.10 mass% or less, thus having excellent laser resistance, mold release properties, and heat yellowing resistance.

The alicyclic structure-containing polymer, the hindered amine compound, and the mold release agent, as well as the other optional components, which are contained in the presently disclosed optical element, each include those described above. The preferred range of the content of one type of compound of the two or more types of fatty acid ester compounds in the optical element, and the preferred range of the percentage of volatilization volume based on the mass of the optical element before heating at the time when the optical element has been heated at 260°C for 1 hour may be each the above range described as the preferred range for the presently disclosed resin composition.

<Method of producing optical element>

The optical element can be produced by shaping the presently disclosed resin composition using any method suitable for the intended shape. Examples of the shaping method include a melt extrusion molding method, a melt casting method, and an injection molding method. The shaping conditions can be set as appropriate depending on the intended shape.

EXAMPLES

The following provides a more detailed description of the present disclosure through examples and comparative examples. Note that the present disclosure is not limited to these examples. In the examples and comparative examples, various attributions and evaluations were performed as follows. Each alicyclic structure-containing polymer used in the

examples and comparative examples was synthesized according to the following.

<Glass-transition temperature of alicyclic structure-containing polymer>

The glass-transition temperature (Tg) of the alicyclic structure-containing polymer was measures in conditions with a heating rate of 10°C/min based on JIS K7121, using a differential scanning calorimeter (produced by SII Nanotechnology, "DSC6220").

<Weight-average molecular weight and molecular weight distribution of alicyclic structure-containing polymer>

The weight-average molecular weight and the molecular weight distribution of the alicyclic structure-containing polymer were determined as polystyrene-equivalent values by gel permeation chromatography (GPC) using cyclohexane as an eluent.

<Volatilization volumes of resin composition and optical element>

The volatilization volume of the resin composition at the time when the resin composition has been heated at a temperature of 260°C for 1 hour was measured according to the following. Using a simultaneous thermogravimetric analyzer (produced by Seiko Instruments Inc., TG/DTA200), a pelletized resin composition before drying, which had been obtained in each of the examples and comparative examples, was heated to 260°C in conditions with a heating rate of 10°C/min, under normal pressure and nitrogen atmosphere, and then heated while keeping the temperature of 260°C for 100 minutes. During the heating time for keeping the temperature over 100 minutes, the percentage mass loss at the time when 30 minutes have passed was determined as G30, the percentage mass loss at the time when 90 minutes have passed was determined as G90, and a volatilization volume ΔG when the pelletized resin composition before drying has been heated at a temperature of 260°C for 1 hour was calculated according to the following formula.

$$\Delta G\ (\text{mass\%}) = G90 - G30$$

FIG. 1 illustrates an example graph of a heating loss curve of pentaerythritol fatty acid ester. In FIG. 1, the horizontal axis indicates a heating time, and the longitudinal axis indicates a heating loss (mass%). FIG. 1 allows accurate measurement of the heating loss (mass%) at 260°C at each heating time.

For a flat plate-shaped molded resin product produced in each of the examples, the measurement was performed in the same way as above, and it was confirmed that the volatilization volume was 0.10 mass% or less.

(Method of determining content of each fatty acid ester compound contained in mold release agent)

The GPC method was performed in the following conditions:

Measuring instrument: HLC-8220GPC (produced by Tosoh Corporation);
Column: G2000HXL + G1000HXL;
Solvent: THF;
Flow rate: 1.0 ml/min;
Column temperature: 40°C;
Sample concentration: 0.3%;
Injection volume: 100 μL;
Detection sensitivity: 0.100 mV/min;
Detector: RI; and
Standard substance: polystyrene (produced by Tosoh Corporation; Mw = 526, 2630, 10200).

The GPC measurement was performed in the above conditions, and based on the chart area ratio, the content of each fatty acid ester compound contained in the mold release agent (mass%; value per 100 mass% of the total mass of fatty acid monoester, fatty acid diester, fatty acid triester, fatty acid tetraester, and inevitable impurities such as free fatty acid) was determined.

<Light transmittance>

For two of the flat plate-shaped molded resin products obtained in each of the examples and comparative

examples, the light transmittance with a wavelength of 400 nm and an optical path length of 3 mm was measured using a spectrophotometer (produced by JASCO Corporation; "V-570"). The initial value of the light transmittance with a wavelength of 400 nm was determined as T0%:

A: 90% or more; and
B: less than 90%.

<Laser resistance>

The flat plate-shaped molded resin products that had been subject to the evaluation for the light transmittance were irradiated with blue laser with an oscillation wavelength of 405±10 nm, under an environment with a temperature of 80°C, at an output of 4000 mW/cm$^2$ for 500 hours. The degree of reduction in light transmittance measured with a wavelength of 400 nm before and after the irradiation with blue laser light under the above conditions was measured. The initial value T0% of the light transmittance with a wavelength of 400 nm, which had been measured above, and a value T1% of the light transmittance with a wavelength of 400 nm after the irradiation were used to determine an absolute value |ΔT%| of a difference T1 - T0 between them, and the evaluation was performed according to the following criteria. The value T1% of the light transmittance of a light beam with a wavelength of 400 nm after the irradiation was also measured using a spectrophotometer (produced by JASCO Corporation; V-570). A smaller absolute value of the difference between them reduces the degree of white turbidity that may be generated, thus indicating excellent laser resistance:

A: $\Delta T\% \leq 0.2\%$;
B: $0.2\% < \Delta T\% \leq 0.5\%$; and
C: $0.5\% < \Delta T\%$.

<Mold release properties>

The resin composition (pellets) used for the production of the optical element in each of the examples and the comparative examples was heated at 80°C for 4 hours to be dried. Subsequently, the dry pellets were molded into an optical element (lens; diameter: 3.5 mm, R = 2.2 mm) using an injection molding machine (product number α-100B produced by FANUC CORPORATION). The molding conditions included a resin temperature of 260°C, a mold temperature of 115°C, and a cycle time of 1 minute. The amount of the resin composition per shot was 25 g. The number of shots until attachment of the optical element to the mold occurred at the first time was recorded. When the attachment occurred, the test was stopped at the time, and even when no attachment occurred, the test was terminated after 600 shots. A large number of shots until the attachment occurs indicates good mold release properties. The evaluation was performed according to the following criteria. Table 1 presents the results:

A: 500 shots or more;
B: 200 shots or more and less than 500 shots; and
C: Molding is not possible (less than 200 shots).

<Heat yellowing resistance>

For two of the flat plate-shaped molded resin products obtained in each of the examples and comparative examples, the yellowness index (YI) was measured in a transparent mode with an optical path length of 3 mm, using a chromometer (product name: "SE-2000"; produced by NIPPON DENSHOKU INDUSTRIES CO., LTD.) in accordance with JISK7373. At this time, the yellowness index of air alone was measured as a blank. Subsequently, a heat resistance test was performed by standing the optical element under conditions with an oxygen concentration of 21 volume% and a temperature of 100°C, for 1,000 hours, and the yellowness index was then measured in the same way as above. A degree of yellowness (ΔδYI) was determined using the following formula and then evaluated according to the following criteria.

$$\Delta\delta YI = \Delta\delta YI_1 - \Delta\delta YI_0$$

In Formula (I), $\Delta\delta YI_1$ represents a difference between a yellowness index (YIi) of the test piece after the heat resistance test and a yellowness index (YIB) of the blank (air), and $\Delta\delta YI_0$ represents a difference between a yellowness index ($YI_0$) of the test piece before the heat resistance test and a yellowness index (YIB) of the blank (air). A smaller ΔδYI means fewer yellowing and good heat resistance under high temperature:

A: less than 0.3;
B: 0.3 or more and less than 0.5; and
C: 0.5 or more.

(Example 1)

<Synthesis of alicyclic structure-containing polymer>

In a dried and nitrogen-substituted stainless pressure vessel, 76 parts of styrene and 4 parts of isoprene were sealed and stirred to prepare a mixed monomer. Subsequently, a stainless steel autoclave equipped with a dried and nitrogen-substituted electromagnetic stirring device was charged with 320 parts of dehydrated cyclohexane, 4 parts of the mixed monomer prepared above, and 0.1 parts of dibutyl ether. While these materials were stirred at 50°C, 0.18 parts of hexane solution (concentration: 15%) of n-butyllithium was added into the autoclave to start polymerization. After the elapse of 0.5 hours from the start of reaction (at the time, the conversion rate was 96%), 76 parts of the mixed monomer was continuously added to the polymerization reaction solution over 1 hour to continue the polymerization reaction. After the elapse of further 0.5 hours from the end of addition (at the time, the conversion rate was 95%), 0.1 parts of isopropanol was added to stop the polymerization reaction, thus obtaining a reaction solution that contains a styrene-isoprene copolymer. To 400 parts of the obtained reaction solution, 8 parts of stabilized nickel hydrogenation catalyst E19Z (produced by JGC CORPORATION; nickel/diatomite-based hydrogenation catalyst (nickel content: 60%)) was added, and the stainless steel autoclave was then charged with these materials. The inside of the autoclave was substituted with a hydrogen gas, hydrogen was supplied to keep the pressure inside the autoclave at 4.5 MPa, and hydrogenation reaction was then performed at 160°C for 6 hours. Subsequently, pressure filtration was performed at a pressure of 0.25 MPa, using a pressure filter (Funda filter produced by IHI Corporation) using Radiolite #800 as a filter bed to obtain a clear colorless solution with the catalyst removed. This hydrogenation reaction solution was poured into a mixed solution of 250 parts of acetone and 250 parts of isopropanol, while being stirred, and the hydrogenated product was deposited, separated by filtering, and then recovered. The recovered hydrogenated product was further washed with 200 parts of acetone and then dried for 24 hours in a vacuum drier at 100°C with reduced pressure of 1 mmHg or less. The yield of the hydrogenated product was 99%. For this hydrogenated product, the weight-average molecular weight (Mw) was 91,000, the molecular weight distribution (Mw/Mn) was 1.27, and Tg was 125°C. Hereinafter, the obtained hydrogenated product may be referred to as "HPSt".

<Production of resin composition>

To 100 parts of the alicyclic structure-containing polymer (HPSt) obtained above, 0.1 parts of 6-t-butyl-4-[3-(2,4,8,10-tetra-t-butyldibenzo[d,f][1,3,2]dioxaphosphepin-6-yloxy)propyl]-o-cresol (produced by SUMITOMO CHEMICAL COMPANY, LIMITED; "SUMILIZER GP") as an antioxidant, 0.1 parts of a polycondensate of dibutylamine, 2,4,6-trichloro-1,3,5-triazine, N,N'-bis(2,2,6,6-tetramethyl-4-piperidyl-1,6-hexamethylendiamine, and N-(2,2,6,6-tetramethyl-4-piperidyl)butylamine (produced by BASF; "CHIMASSORB® (CHIMASSORB is a registered trademark in Japan, other countries, or both) 2020FDL"; number-average molecular weight: 2600 to 3400; nominal value) (hereinafter, "hindered amine compound") as a hindered amine compound (HALS) that is a light stabilizer, and 0.5 parts of pentaerythritol fatty acid ester composition (containing 68 mass% of pentaerythritol tetrastearate and 27 mass% of pentaerythritol tristearate, and the remainder being pentaerythritol fatty acid ester with a lower degree of esterification than those of pentaerythritol tetrastearate and pentaerythritol tristearate, and inevitable impurities such as free fatty acid) as a mold release agent were added. These materials were then kneaded using a twin screw kneader (produced by Toshiba Machine Co., Ltd.; TEM-35B; screw diameter: 37 mm; L/D = 32; screw speed: 250 rpm; resin temperature: 230°C; feed rate: 10 kg/hr) and extruded to obtain a pelletized resin composition. The obtained pellets were heated at 80°C for 4 hours to be dried.

<Production of optical element>

The dry pellets obtained above were injection molded in conditions with a resin temperature of 260°C, a mold temperature of 110°C, and a cycle time of 1 minute, using an injection molding machine (produced by FANUC CORPORATION; product number: $\alpha$-100B) to obtain four flat plate-shaped molded resin products (optical elements) with 65 mm $\times$ 65 mm $\times$ 3 mm. For the obtained optical elements, various evaluations were performed according to the above. Table 1 presents the results.

(Example 2)

Various operations, measurements, and evaluations were performed in the same way as in Example 1, except that a pentaerythritol fatty acid ester composition that contains 69 mass% of pentaerythritol tristearate and 25 mass% of pentaerythritol distearate (the remainder being pentaerythritol fatty acid ester having a degree of esterification different from those of pentaerythritol tristearate and pentaerythritol distearate, and inevitable impurities such as free fatty acid) with this percentage was blended as a mold release agent. Table 1 presents the results.

(Example 3)

Various operations, measurements, and evaluations were performed in the same way as in Example 1, except that a pentaerythritol fatty acid ester composition that contains 55 mass% of pentaerythritol tetrastearate and 35 mass% of pentaerythritol tristearate (the remainder being pentaerythritol fatty acid ester having a lower degrees of esterification than those of pentaerythritol tetrastearate and pentaerythritol tristearate, and inevitable impurities such as free fatty acid) with this percentage was blended as a mold release agent. Table 1 presents the results.

(Example 4)

Various operations, measurements, and evaluations were performed in the same way as in Example 1, except that a pentaerythritol fatty acid ester composition that contains 75 mass% of pentaerythritol tetrastearate and 20 mass% of pentaerythritol tristearate (the remainder being pentaerythritol fatty acid ester having a lower degrees of esterification than those of pentaerythritol tetrastearate and pentaerythritol tristearate, and inevitable impurities such as free fatty acid) with this percentage was blended as a mold release agent, and that the hindered amine compound as a light stabilizer was replaced with poly[{6-(1,1,3,3-tetramethylbutyl)amino-1,3,5-triazine-2,4-diyl}{(2,2,6,6-tetramethyl-4-piperidyl)imino}hexamethylene {(2,2,6,6-tetramethyl-4-piperidyl)imino}] (produced by BASF; "CHIMASSORB® (CHIMASSORB is a registered trademark in Japan, other countries, or both) 944FDL"; molecular weight: 2000 to 3100; nominal value). Table 1 presents the results.

(Example 5)

Various operations, measurements, and evaluations were performed in the same way as in Example 1, except that the blending amount of the mold release agent was changed to 0.2 parts by mass. Table 1 presents the results.

(Example 6)

Various operations, measurements, and evaluations were performed in the same way as in Example 1, except that the blending amount of the mold release agent was changed to 0.8 parts by mass. Table 1 presents the results.

(Example 7)

Various operations, measurements, and evaluations were performed in the same way as in Example 1, except that an ethylene/TCD copolymer, an alicyclic structure-containing polymer synthesized according to the following was used instead of HPSt. Table 1 presents the results.

<Synthesis of alicyclic structure-containing polymer>

A nitrogen-substituted glass autoclave with an inner capacity of 500 ml was charged with 235 ml of cyclohexane, and the liquid phase and gas phase were saturated with ethylene with a flow rate of 50 liter/hr. Then, to this autoclave, 2 ml of tetracyclo[4.4.$1^{2,5}$.$1^{7,10}$.0]dodeca-3-ene (hereinafter, abbreviated as "TCD"), 1.25 mmol (in terms of aluminum atom) of methyl aluminoxane, and subsequently 0.001 mmol of transition metal compound catalyst were added according to a conventional method to start polymerization. After the reaction under ethylene gas atmosphere at a temperature of 25°C and at normal pressure for 10 minutes, a small amount of isobutyl alcohol was added to stop the polymerization. After the end of the polymerization, the reactant was put into an acetone/methanol (each 500 ml) mixed solvent with 5 ml of concentrated hydrochloric acid added, to deposit the total amount of polymer. Then, the polymer was stirred and subsequently filtered with a glass filter. After the polymer was dried under reduced pressure at 130°C for 10 hours, an ethylene/TCD copolymer was obtained. When the weight-average molecular weight (Mw) and the molecular weight distribution (Mw/Mn) of the ethylene/TCD copolymer were measured, Mw was 65,000, and Mw/Mn was 2.15. The glass-transition temperature was 132°C.

(Comparative Example 1)

Various operations, measurements, and evaluations were performed in the same way as in Example 1, except that a pentaerythritol fatty acid ester composition that contains 41 mass% of pentaerythritol distearate and 38 mass% of pentaerythritol tristearate (the remainder being pentaerythritol fatty acid ester having a degree of esterification different from those of pentaerythritol distearate and pentaerythritol tristearate, and inevitable impurities such as free fatty acid) with this percentage was blended as a mold release agent. Table 1 presents the results.

(Comparative Example 2)

Various operations, measurements, and evaluations were performed in the same way as in Example 1, except that 1 part by mass of a pentaerythritol fatty acid ester composition that contains 90 mass% or more of pentaerythritol tetrastearate (the remainder being pentaerythritol fatty acid ester having a degree of esterification different from that of pentaerythritol tetrastearate, and inevitable impurities such as free fatty acid) with this percentage was blended as a mold release agent. Table 1 presents the results.

(Comparative Example 3)

Various operations, measurements, and evaluations were performed in the same way as in Example 1, except that a pentaerythritol fatty acid ester composition that contains 90 mass% or more of pentaerythritol distearate (the remainder being pentaerythritol fatty acid ester having a degree of esterification different from that of pentaerythritol distearate, and inevitable impurities such as free fatty acid) with this percentage was blended as a mold release agent. Table 1 presents the results.

(Comparative Example 4)

Various operations, measurements, and evaluations were performed in the same way as in Example 1, except that a pentaerythritol fatty acid ester composition that contains 65 mass% of pentaerythritol tetrastearate and 30 mass% of pentaerythritol tristearate (the remainder being pentaerythritol fatty acid ester having a lower degree of esterification than those of pentaerythritol tetrastearate and pentaerythritol tristearate, and inevitable impurities such as free fatty acid) with this percentage was blended as a mold release agent, and that a resin composition was produced with a volatilization volume at the time when the resin composition had been heated at 260°C for 1 hour of 0.15 mass%. Table 1 presents the results.

In Table 1,

"HPSt" indicates a styrene-isoprene copolymer hydride;
"TCD" indicates tetracyclododecene;
"2020" indicates CHIMASSORB® (CHIMASSORB is a registered trademark in Japan, other countries, or both) 2020FDL;
"944" indicates CHIMASSORB® (CHIMASSORB is a registered trademark in Japan, other countries, or both) 944FDL; and
"GP" indicates SUMILIZER GP,
respectively.

[Table 1]

| | | | | Example | | | | | | | Comparative Example | | | |
|---|---|---|---|---|---|---|---|---|---|---|---|---|---|---|
| | | | | 1 | 2 | 3 | 4 | 5 | 6 | 7 | 1 | 2 | 3 | 4 |
| Resin composition | Resin | Alicyclic structure-containing polymer | type | HPSt | HPSt | HPSt | HPSt | HPSt | HPSt | Ethylene/TCD copolymer | HPSt | HPSt | HPSt | HPSt |
| | | | content (parts by mass) | 100 | 100 | 100 | 100 | 100 | 100 | 100 | 100 | 100 | 100 | 100 |
| | Light stabilizer | Hindered amine compound | type | 2020 | 2020 | 2020 | 944 | 2020 | 2020 | 2020 | 944 | 2020 | 2020 | 2020 |
| | | | molecular weight | 2600-3400 | 2600-3400 | 2600-3400 | 2000-3100 | 2600-3400 | 2600-3400 | 2600-3400 | 2000-3100 | 2600-3400 | 2600-3400 | 2600-3400 |
| | | | content (parts by mass) | 0.1 | 0.1 | 0.1 | 0.1 | 0.1 | 0.1 | 0.1 | 0.1 | 0.1 | 0.1 | 0.1 |
| | Antioxidant | Hindered phenol compound | type | GP | GP | GP | GP | GP | GP | GP | GP | GP | GP | GP |
| | | | content (parts by mass) | 0.1 | 0.1 | 0.1 | 0.1 | 0.1 | 0.1 | 0.1 | 0.1 | 0.1 | 0.1 | 0.1 |
| | Mold release agent | Fatty acid tetraester of pentaerythritol | percentage (mass%) | 68 | - | 55 | 75 | 68 | 68 | 68 | - | 90≤ | - | 65 |
| | | Fatty acid triester of pentaerythritol | percentage (mass%) | 27 | 69 | 35 | 20 | 27 | 27 | 27 | 38 | - | - | 30 |
| | | Fatty acid diester of pentaerythritol | percentage (mass%) | - | 25 | - | - | - | - | - | 41 | - | 90≤ | - |
| | | content (parts by mass) | | 0.5 | 0.5 | 0.5 | 0.5 | 0.2 | 0.8 | 0.5 | 0.5 | 1 | 0.5 | 0.5 |
| | Volatilization volume | mass% | | 0.04 | 0.07 | 0.09 | 0.02 | 0.02 | 0.07 | 0.05 | 0.15 | 0.02 | 0.11 | 0.15 |

(continued)

| | | Example | | | | | | | Comparative Example | | | |
|---|---|---|---|---|---|---|---|---|---|---|---|---|
| | | 1 | 2 | 3 | 4 | 5 | 6 | 7 | 1 | 2 | 3 | 4 |
| Evaluation | Light transmittance | A | B | A | A | A | B | B | B | A | B | B |
| | Laser resistance | A | B | B | A | A | B | B | C | A | B | C |
| | Mold release properties | A | A | A | B | B | A | A | A | C | A | A |
| | Heat yellowing resistance | A | B | A | A | A | A | B | C | A | C | B |

From Table 1, it is found that an optical element with excellent laser resistance, mold release properties, and heat yellowing resistance can be formed with a resin composition containing two or more types of predetermined fatty acid ester compounds at a predetermined ratio and having a percentage of volatilization volume when the volatilization volume is measured under predetermined conditions being 0.10 mass% or less.

INDUSTRIAL APPLICABILITY

This disclosure can provide a resin composition that can achieve a balance of the laser resistance, mold release properties, and heat yellowing resistance of the optical element to be obtained, at a high level.
This disclosure can also provide an optical element with excellent laser resistance, mold release properties, and heat yellowing resistance.

**Claims**

1. A resin composition comprising an alicyclic structure-containing polymer, a hindered amine compound, and a mold release agent, wherein

    the mold release agent contains two or more types of fatty acid ester compounds selected from the group including fatty acid diester of pentaerythritol, fatty acid triester of pentaerythritol, and fatty acid tetraester of pentaerythritol,
    one type of compound of the two or more types of fatty acid ester compounds has a content of 50 mass% or more and less than 80 mass% with respect to the whole content of the mold release agent, and
    the percentage of volatilization volume based on the mass of the resin composition before heating at the time when the resin composition has been heated at 260°C for 1 hour is 0.10 mass% or less.

2. The resin composition according to claim 1, wherein the mold release agent has a content of 0.2 mass% or more and 0.8 mass% or less per 100 parts by mass of the alicyclic structure-containing polymer.

3. The resin composition according to claim 1, wherein the mold release agent contains fatty acid triester of pentaerythritol and fatty acid tetraester of pentaerythritol.

4. The resin composition according to any one of claims 1 to 3, wherein one type of fatty acid ester compound having a higher degree of esterification of the two or more types of fatty acid ester compounds has a content of 50 mass% or more and less than 80 mass% with respect to the whole content of the mold release agent.

5. An optical element comprising an alicyclic structure-containing polymer, a hindered amine compound, and a mold release agent, wherein

    the mold release agent contains two or more types of fatty acid ester compounds selected from the group including fatty acid diester of pentaerythritol, fatty acid triester of pentaerythritol, and fatty acid tetraester of pentaerythritol,
    one type of compound of the two or more types of fatty acid ester compounds has a content of 50 mass% or more and less than 80 mass% with respect to the whole content of the mold release agent, and
    the percentage of volatilization volume based on the mass of the optical element before heating at the time when the optical element has been heated at 260°C for 1 hour is 0.10 mass% or less.

FIG. 1

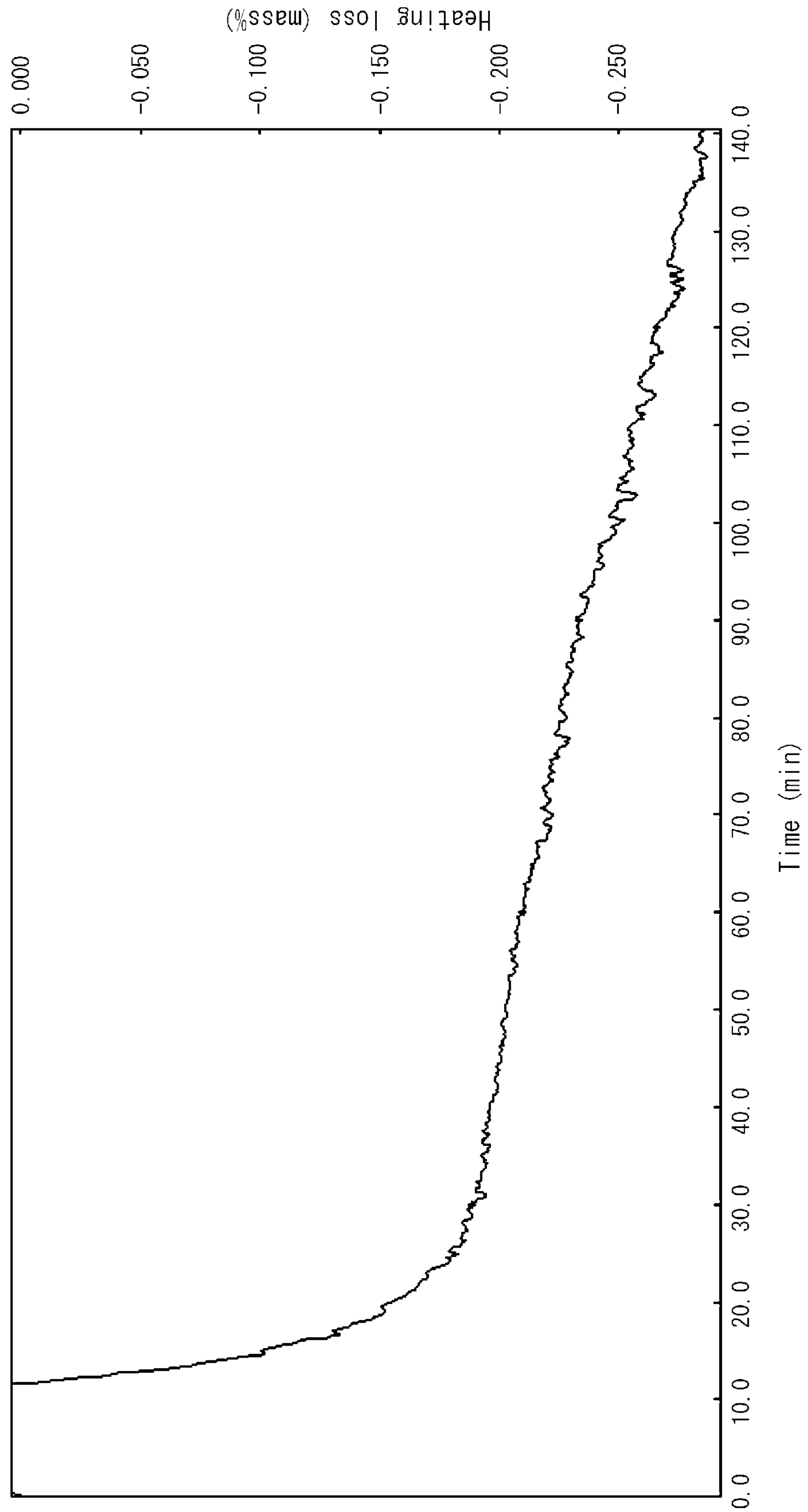
Heating loss (mass%)
0.000
-0.050
-0.100
-0.150
-0.200
-0.250
Time (min)
0.0
10.0
20.0
30.0
40.0
50.0
60.0
70.0
80.0
90.0
100.0
110.0
120.0
130.0
140.0

## INTERNATIONAL SEARCH REPORT

International application No.
**PCT/JP2022/038995**

**A. CLASSIFICATION OF SUBJECT MATTER**

***C08L 101/02***(2006.01)i; ***C08K 5/103***(2006.01)i; ***C08K 5/34***(2006.01)i; ***G02B 1/04***(2006.01)i
FI: C08L101/02; C08K5/34; C08K5/103; G02B1/04

According to International Patent Classification (IPC) or to both national classification and IPC

**B. FIELDS SEARCHED**

Minimum documentation searched (classification system followed by classification symbols)

C08L101/02; C08K5/103; C08K5/34; G02B1/04

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

CAplus/REGISTRY (STN)

**C. DOCUMENTS CONSIDERED TO BE RELEVANT**

| Category* | Citation of document, with indication, where appropriate, of the relevant passages | Relevant to claim No. |
|---|---|---|
| A | JP 2009-209166 A (ZEON CORP.) 17 September 2009 (2009-09-17) | 1-5 |
| A | WO 2007/129528 A1 (KONICA MINOLTA OPTO, INC.) 15 November 2007 (2007-11-15) | 1-5 |
| A | WO 1990/008173 A1 (MITSUI PETROCHEMICAL INDUSTRIES, LTD.) 26 July 1990 (1990-07-26) | 1-5 |
| A | JP 6-345938 A (TORAY INDUSTRIES, INC.) 20 December 1994 (1994-12-20) | 1-5 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **24 November 2022** | **06 December 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**
**Information on patent family members**

International application No.
**PCT/JP2022/038995**

| Patent document cited in search report | Publication date (day/month/year) | Patent family member(s) | Publication date (day/month/year) |
|---|---|---|---|
| JP 2009-209166 A | 17 September 2009 | (Family: none) | |
| WO 2007/129528 A1 | 15 November 2007 | US 2009/0238057 A1 | |
| WO 1990/008173 A1 | 26 July 1990 | US 5395869 A<br>EP 423346 A1<br>KR 10-1991-0700306 A<br>CA 2025021 A1 | |
| JP 6-345938 A | 20 December 1994 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2010184955 A
- JP 2009209166 A
- WO 2005073321 A1